# EUROPEAN PATENT APPLICATION

(11) **EP 4 708 989 A1**
(43) Date of publication of application: **11.03.2026**
(21) Application number: 23935669.4
(22) Date of filing: 04.05.2023
(51) Int. Cl.: H04W 72/02

(54) **WIRELESS COMMUNICATION METHOD, TERMINAL DEVICE, AND NETWORK DEVICE**

(71) Applicant: Quectel Wireless Solutions Co., Ltd., Shanghai 201601 (CN)
(72) Inventor: LYU, Ling, Shanghai 201601 (CN); ZHAO, Zheng, Shanghai 201601 (CN); YANG, Zhongzhi, Shanghai 201601 (CN)
(74) Representative: Fish & Richardson P.C.
(86) International application number: PCT/CN2023/092100
(87) International publication number: WO 2024/227296

(57) **Abstract**

A method for wireless communication, a terminal device, and a network device are provided. The method includes: sending, by a terminal device, first information to a first network device. The first information is used to indicate to the first network device that no gap is configured in one or more time windows.

## Description

### TECHNICAL FIELD

The present disclosure relates to the field of communication technology, and more specifically to a method for wireless communication, a terminal device, and a network device.

### BACKGROUND

Due to diverse needs of users, a terminal device may need to perform related operations across multiple networks. For example, in multi-SIM technology, which deals with certain users' requirement for separation between work and personal life, the terminal device may need to switch or communicate across multiple networks.

With the development of communication technology, the issue of energy consumption has begun to attract attention. In response to the energy consumption problem, relevant technologies have proposed network energy-saving projects. Therefore, some of the above multiple networks may adopt network energy-saving measures. In scenarios where the terminal device needs to perform related operations across multiple networks, the adoption of network energy-saving measures by some networks may affect the operations of the terminal device in other networks.

### SUMMARY

The present disclosure provides a method for wireless communication, a terminal device, and a network device. Various aspects related to the present disclosure are described below.

The present disclosure provides a method for wireless communication, a terminal device, and a network device. Various aspects related to the present disclosure are described below.

According to a first aspect, a method for wireless communication is provided, including: sending, by a terminal device, first information to a first network device, where the first information is used to indicate to the first network device that no gap is configured in one or more time windows.

According to a second aspect, a method for wireless communication is provided, including: receiving, by a first network device, first information sent by a terminal device, where the first information is used to indicate to the first network device that no gap is configured in one or more time windows.

According to a third aspect, a method for wireless communication is provided, including: sending, by a second network device, energy-saving information of the second network device to a terminal device, where the energy-saving information is used for the terminal device to determine first information, and the first information is used to indicate to a first network device that no gap is configured in one or more time windows.

According to a fourth aspect, a terminal device is provided, including: a sending module, configured to send first information to a first network device, where the first information is used to indicate to the first network device that no gap is configured in one or more time windows.

According to a fifth aspect, a network device is provided, where the network device is a first network device, and the first network device includes: a receiving module, configured to receive first information sent by a terminal device, where the first information is used to indicate to the first network device that no gap is configured in one or more time windows.

According to a sixth aspect, a network device is provided, where the network device is a second network device, and the second network device includes: a sending module, configured to send energy-saving information of the second network device to a terminal device, where the energy-saving information is used for the terminal device to determine first information, and the first information is used to indicate to the first network device that no gap is configured in one or more time windows.

According to a seventh aspect, a terminal device is provided, including a processor, a memory, and a communication interface, where the memory is configured to store one or more computer programs, and the processor is configured to invoke the computer programs in the memory to cause the terminal device to perform some or all of the operations in the method according to the first aspect.

According to an eighth aspect, a network device is provided, including a processor, a memory, and a communication interface, where the memory is configured to store one or more computer programs, and the processor is configured to invoke the computer programs in the memory to cause the network device to perform some or all of the operations in the method according to any one of the second aspect to the third aspect.

According to a ninth aspect, an embodiment of the present disclosure provides a communication system, where the system includes the foregoing terminal device and/or network device. In another possible design, the system may further include another device in the solution provided in the embodiments of the present disclosure that interacts with the terminal device or the network device.

According to a tenth aspect, an embodiment of the present disclosure provides a computer-readable storage medium, where the computer-readable storage medium stores a computer program, and the computer program causes a computer to perform some or all of the operations in the methods in the foregoing aspects.

According to an eleventh aspect, an embodiment of the present disclosure provides a computer program product, where the computer program product includes a non-transitory computer-readable storage medium storing a computer program, and the computer program is executable to cause a computer to perform some or all of the operations in the methods in the foregoing aspects. In some implementations, the computer program product may be a software installation package.

According to a twelfth aspect, an embodiment of the present disclosure provides a chip, where the chip includes a memory and a processor, and the processor may invoke and run a computer program from the memory, to implement some or all of the operations described in the methods in the foregoing aspects.

In the embodiments of the present disclosure, in a scenario where the terminal device needs to perform related operations across a plurality of networks, the terminal device can indicate to the first network device in which time windows it does not configure gaps, thereby facilitating avoiding the influence of energy-saving measures of the second network device on the terminal device in performing related operations in the network corresponding to the first network device.

### BRIEF DESCRIPTION OF THE DRAWINGS

FIG. 1 is an exemplary diagram of a system architecture of a wireless communication system applied in an embodiment of the present disclosure.
FIG. 2 is a schematic structural diagram of a terminal device applying a dual-SIM technology according to an embodiment of the present disclosure.
FIG. 3 is a schematic flowchart of a terminal device sending or updating capability of a terminal device to a network device.
FIG. 4 is a schematic flowchart of a method for wireless communication according to an embodiment of the present disclosure.
FIG. 5 is another schematic flowchart of a method for wireless communication according to an embodiment of the present disclosure.
FIG. 6 is another schematic flowchart of a method for wireless communication according to an embodiment of the present disclosure.
FIG. 7 is another schematic flowchart of a method for wireless communication according to an embodiment of the present disclosure.
FIG. 8 is a schematic structural diagram of a terminal device according to an embodiment of the present disclosure.
FIG. 9 is a schematic structural diagram of a network device according to an embodiment of the present disclosure.
FIG. 10 is another schematic structural diagram of a network device according to an embodiment of the present disclosure.
FIG. 11 is a schematic structural diagram of an apparatus for communication according to an embodiment of the present disclosure.

### DETAILED DESCRIPTION OF THE EMBODIMENTS

The technical solutions in the present disclosure will be described below with reference to the accompanying drawings in embodiments of the present disclosure. Apparently, the described embodiments are part of not all of the embodiments of the present disclosure.

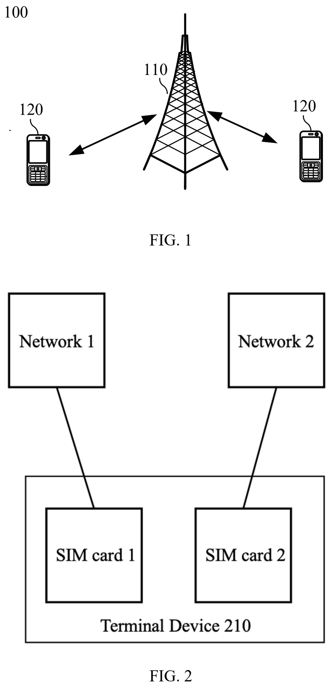

FIG. 1 is an example diagram of a system architecture of a wireless communication system 100 applied in embodiments of the present disclosure. The wireless communication system 100 includes a network device 110 and a terminal device 120, and the network device 110 may be a device that communicates with the terminal device 120. The network device 110 provides communication coverage for a particular geographic area and communicates with the terminal device 120 located within the coverage area.

FIG. 1 exemplarily shows a network device and two terminal devices. Optionally, the wireless communication system 100 may include a plurality of network devices, and the coverage of each network device may include other numbers of terminals, which is not limited in the embodiments of the present disclosure.

Optionally, the wireless communication system 100 may further include another network entity such as a network controller, a mobility management entity, etc., which is not limited in the embodiments of the present disclosure.

It should be understood that the technical solutions in the embodiments of the present disclosure may be applied to various communication systems, for example, a global system for mobile communication (GSM) system, a code division multiple access (CDMA) system, a wideband code division multiple access (WCDMA) system, a general packet radio service (GPRS), a 5^{th} generation (5G) or new radio (NR) system, an evolution system of the NR system, a long term evolution (LTE) system, an advanced long term evolution (LTE-A) system, an LTE frequency division duplex (FDD) system, an LTE time division duplex (TDD) system, a LTE-based access to unlicensed spectrum (LTE-U) system, an NR-based access to unlicensed spectrum (NR-U) system, an NTN system, a universal mobile telecommunication system (UMTS), wireless local area networks (WLAN), wireless fidelity (WiFi), etc. The technical solutions provided in the present disclosure may further be applied to another communication system such as a future communication system. The communication system may be, for example, a sixth-generation mobile communication system, a satellite communication system, or the like.

Conventional communication systems support a limited number of connections and are easy to implement. However, with the development of communication technology, communication systems can support not only conventional cellular communications but also one or more other types of communication. For example, communication systems can support one or more of: device-to-device (D2D) communication, machine-to-machine (M2M) communication, machine type communication (MTC), vehicle-to-vehicle (V2V) communication, and vehicle-to-everything (V2X) communication, etc. The embodiments of the present disclosure can also be applied to communication systems that support the above-mentioned communication methods.

The communication system in the embodiments of the present disclosure may be applied to carrier aggregation (CA) scenarios, dual connectivity (DC) scenarios, and standalone (SA) networking scenarios.

The communication system in the embodiments of the present disclosure may be applied to unlicensed spectrum. The unlicensed spectrum may also be considered as shared spectrum. Alternatively, the communication system in the embodiments of the present disclosure may be applied to licensed spectrum. The licensed spectrum may also be considered as dedicated spectrum.

The communication system in the embodiments of the present disclosure may be applied to terrestrial network (TN) systems, or NTN systems. For example, the NTN system may include a 4G-based NTN system, an NR-based NTN system, an Internet of things (IoT)-based NTN system, and a narrow band Internet of things (NB-IoT)-based NTN system.

The terminal device in the embodiments of the present disclosure may also be referred to as user equipment (UE), an access terminal, a subscriber unit, a subscriber station, a mobile station (MS), a mobile terminal (MT), a remote station, a remote terminal, a mobile device, a user terminal, a terminal, a wireless communication device, a user agent, or a user equipment. The terminal device in the embodiments of the present disclosure may be a device that provides voice and/or data connectivity to a user, and may be used to connect a person, an object, and a machine, for example, a handheld device or a vehicle-mounted device having a wireless connection function. The terminal device in the embodiments of the present disclosure may be a mobile phone, a pad, a notebook computer, a palmtop computer, a mobile internet device (MID), a wearable device, a virtual reality (VR) device, an augmented reality (AR) device, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in smart home, etc. Optionally, the UE may serve as a base station. For example, the UE may serve as a scheduling entity that provides a sidelink signal between UEs in V2X, D2D, or the like. For example, cellular phones and automobiles communicate with each other using sidelink signals. The cellular phone communicates with the smart home device without relaying communication signals through the base station.

The network device in the embodiments of the present disclosure may be a device configured to communicate with the terminal, and the network device may also be referred to as an access network device or a radio access network device, e.g., the network device may be a base station. The network device in the embodiments of the present disclosure may refer to a radio access network (RAN) node (or device) that accesses the terminal device to a wireless network. The base station may broadly cover various names in the following or be replaced with the following names. For example, a node B (NodeB), an evolved NodeB (eNB), a next generation NodeB (gNB), a relay station, an access point, a transmitting and receiving point (TRP), a transmitting point (TP), a master station (MeNB), a secondary station (SeNB), a multi-standard radio (MSR) node, a femtocell, a network controller, an access node, a wireless node, an access point (AP), a transmission node, a transceiver node, a base band unit (BBU), a remote radio unit (RRU), an active antenna unit (AAU), a remote radio unit (RRH), a central unit (CU), a distributed unit (DU), a positioning node, and the like. The base station may be a macro base station, a micro base station, a relay node, a donor node or the like, or a combination thereof. The base station may also refer to a communication module, a modem, or a chip for being disposed in the foregoing device or apparatus. The base station may also be a mobile switching center and a device that plays a role of the base station in the D2D, V2X, and M2M communication, a network side device in a 6G network, and a device that plays a role of the base station in a future communication system, etc. The base station supports networks of the same or different access technologies. The specific technology adopted by the network device and a specific form of the device in the embodiments of the present disclosure are not limited in the embodiments of the present disclosure.

The base station may be fixed or mobile. For example, a helicopter or drone may be configured to serve as a mobile base station, and one or more cells move according to the position of the mobile base station. In other examples, a helicopter or drone may be configured to serve as a device in communication with another base station.

In some deployments, the network device in the embodiments of the present disclosure may refer to the CU or the DU, or the network device includes the CU and the DU. The gNB may also include the AAU.

The network device and the terminal device may be deployed on land, including indoor or outdoor, handheld or vehicle-mounted, may be deployed on a water surface, and may also be deployed on an aircraft, a balloon, and a satellite in the air. A scenario in which the network device and the terminal device are located is not limited in the embodiments of the present disclosure.

It should be understood that all or part of functions of the communication device in the present disclosure may also be implemented by a software function running on hardware or implemented by a virtualization function instantiated on a platform (e.g., a cloud platform).

To facilitate understanding, the following introduces some relevant knowledge related to the embodiments of the present disclosure. The following related technologies may be considered as optional solutions to be combined with the technical solutions of the present disclosure in any manner, which all fall within the protection scope of the present disclosure. The embodiments of the present disclosure may include at least part of the following content.

The development of communication technology complements users' diverse communication needs. For example, to cope with some users' communication demand for separating work and life, the 3^{rd} generation partnership project (3GPP) introduced a multi-SIM technology. Taking the dual-SIM technology as an example, two subscriber identity module (SIM) cards may be connected internally within the same terminal device. As shown in FIG. 2, terminal device 210 internally connects two cards, namely SIM card 1 and SIM card 2. Here, SIM card 1 corresponds to Network 1, and SIM card 2 corresponds to Network 2.

In some embodiments, the two cards connected internally within the terminal device may correspond to the same public land mobile network (PLMN) or the same operator's network. For example, both cards may correspond to the network of China Mobile. When the two cards correspond to the same PLMN or the same operator, network elements on two corresponding network sides may interact. Taking FIG. 2 as an example, when Network 1 and Network 2 correspond to the same PLMN, Network 1 and Network 2 may interact.

In some embodiments, the two cards connected internally within the terminal device may also correspond to different PLMNs or networks of different operators. For example, the two cards may correspond to networks of China Mobile and China Unicom, respectively. When the two cards correspond to different PLMNs or networks of different operators, there is no interaction between the network elements on the network sides corresponding to the two cards. Still referring to FIG. 2, when Network 1 and Network 2 correspond to different PLMNs, there is no interaction between Network 1 and Network 2.

Considering the communication methods of the terminal device in the above two scenarios, relevant protocols need to specify interaction processes under different scenarios. To simplify the protocol, the current protocol has designed a unified process to support the above two application scenarios. For example, in the 3GPP protocol, it is uniformly assumed that there is no interaction between multiple networks (e.g., two or more networks) connected by the terminal device. Therefore, it is generally considered that the multiple networks corresponding to the multiple cards connected internally within the terminal device do not interact.

In the case where there is no interaction between the multiple networks connected by the terminal device, the terminal device may need to perform related operations across multiple networks. For example, the terminal device may need to switch or communicate across multiple networks to execute related operations in different networks. Below are two examples of the terminal device performing some operations across multiple networks.

As an example, when the terminal device is in a radio resource control (RRC) connected state in Network 1 and in an RRC idle state or RRC inactive state in Network 2, the terminal device needs to periodically perform some operations in Network 2. These operations may include receiving paging, performing measurements in the idle or inactive state, or measuring signals from a camping cell/other frequency points to determine whether to perform cell reselection, etc. To perform these operations in Network 2, the terminal device may notify Network 1 by indicating "I need to take a leave."

Since there is no interaction between Network 1 and Network 2, Network 1 may not know the time and duration of the operations the terminal device performs in Network 2. For example, when the terminal device needs to receive paging in Network 2, a paging occasion in Network 2 can only be determined by the terminal device and Network 2, and Network 1 does not know the specific time and duration when the terminal device is receiving paging in Network 2. Therefore, when the terminal device requests to "take leave" from Network 1, it also needs to provide specific leave information to Network 1, such as notifying Network 1 of "the time windows where a GAP should be configured," or "the time windows during which no data should be transmitted with Network 1." Exemplarily, the terminal device may notify Network 1 of "how often it should take leave, a start time of the leave is XXX, and an end time of the leave is XXXX." This information may collectively be referred to as UE assistance information (UAI).

For Network 1, Network 1 may configure the GAP for the terminal device based on the UE assistance information provided by the terminal device. During the GAP period, the terminal device may switch to Network 2 to perform operations like receiving paging or measurement. A network device corresponding to Network 1 will not schedule the terminal device during the GAP period.

It should be noted that, in some embodiments, the GAP configured by Network 1 for the terminal device may not be exactly the same as the GAP requested by the terminal device. This is because the GAP ultimately configured by Network 1 for the terminal device depends on the implementation of Network 1. The terminal device only has a suggestion authority but does not have a final decision-making authority.

As another example, when the terminal device is in the RRC connected state in Network 1 and also in the RRC connected state in Network 2, the terminal device may need to perform certain operations simultaneously in both networks. For example, the terminal device may communicate with both Network 1 and Network 2 simultaneously, such as transmitting data in both networks. Since Network 1 and Network 2 do not interact, Network 1 may be unaware that the terminal device is performing operations in both Network 1 and Network 2 simultaneously. Therefore, under the condition of limited hardware capabilities of the terminal device, Network 1 may perceive the capabilities of the terminal device as variable. For example, Network 1 may consider the capabilities of the terminal device to be different in the following two scenarios. In scenario 1, the terminal device is in the RRC idle state or RRC inactive state in Network 2. In scenario 2, the terminal device is in the RRC connected state in Network 2.

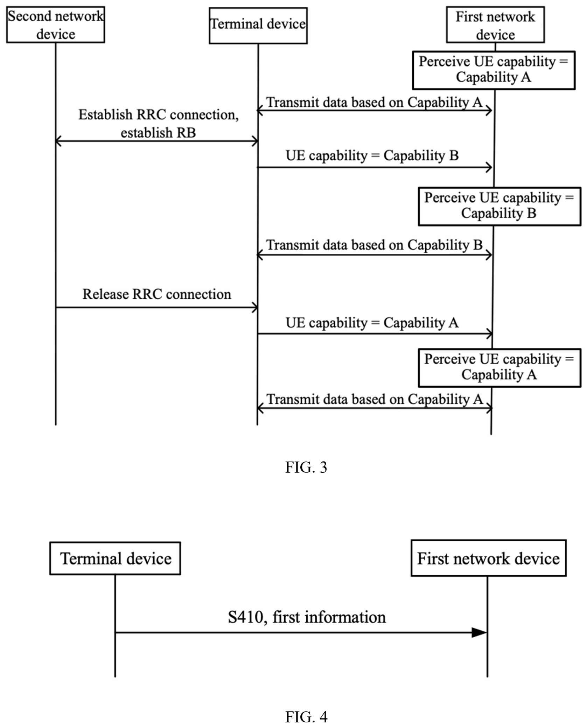

To perform these operations simultaneously in the two networks, as an implementation, the terminal device may achieve this by notifying Network 1 of its capability. For example, the terminal device may send or update its capability to Network 1 based on its connection status in Network 2. Below, an example of the terminal device sending or updating its capability to Network 1 is provided with reference to FIG. 3.

Referring to FIG. 3, when the terminal device is in the RRC idle state or RRC inactive state in Network 2, and the terminal device is transmitting data with Network 1, the network device in Network 1 perceives the capability of the terminal device as Capability A, and the terminal device and Network 1 may perform data transmission based on Capability A. However, if the terminal device needs to establish an RRC connection or a radio bearer (RB) with Network 2 for data transmission, in this case, the terminal device may request Network 1 (such as the network device in Network 1) to change its capability from Capability A to Capability B. Subsequently, Network 1 may reconfigure radio bearer parameters between Network 1 and the terminal device based on the new capability (Capability B) of the terminal device and perform data transmission with the terminal device based on Capability B. In some embodiments, once the RRC connection between the terminal device and Network 2 is released, the terminal device may request Network 1 to update its capability again, changing the terminal device's capability back to Capability A. Thereafter, Network 1 may reconfigure the radio bearer parameters between Network 1 and the terminal device based on the updated capability (Capability A) of the terminal device and perform data transmission with the terminal device based on Capability A.

In some embodiments, if the terminal device is in the RRC connected state in Network 2, Network 1 may configure parameters based on a lower capability of the terminal device when communicating with the terminal device; if the terminal device is in the RRC idle state or RRC inactive state in Network 2, Network 1 and the terminal device may configure parameters based on a higher capability of the terminal device. Taking the aforementioned Capability A and Capability B as an example, Capability A may be greater than Capability B.

Since the establishment of the connection between the terminal device and Network 2 is unpredictable, for Network 1, the update of the terminal device's capability can only be initiated by the terminal device. Network 1 cannot update the terminal device's capability based on a preset time period, nor can it pre-configure a time period for the terminal device to perform capability updates.

With the development of communication technologies, energy consumption has become a growing concern. In response to energy consumption, relevant technologies have introduced network energy-saving projects. For example, 3GPP proposed the topic of base station energy saving in Release 18 (R18). In scenarios where the terminal device performs operations across multiple networks, some of these networks may adopt network energy-saving measures, which could impact the operations of the terminal device in other networks.

A main energy-saving measure in the network energy-saving projects is time-based, in which the network device enters an energy-saving state during certain periods. Therefore, if some networks in multiple networks adopt time-based network energy-saving measures, it may affect the terminal device's operations in other networks.

The following provides further exemplary explanation of the above issues with an example where the terminal device supports dual-SIM technology and performs operations in both Network 1 and Network 2.

As an example, in a scenario where the terminal device is in the RRC idle state or RRC inactive state in Network 2, if Network 2 adopts energy-saving measures, the GAP configured by Network 1 for the terminal device may fall within the time period when Network 2 is in the energy-saving state. As a result, the terminal device cannot perform related operations in Network 2 during this GAP period, leading to resource waste.

As another example, in a scenario where the terminal device is in the RRC connected state in Network 2, if Network 2 adopts energy-saving measures and does not communicate with the terminal device during certain time periods, but Network 1 is not aware of this in time, Network 1 may assume that the terminal device can still communicate with Network 2. Therefore, to ensure communication between the terminal device and Network 1, Network 1 can only communicate with the terminal device based on a lower capability during this time period, resulting in resource waste.

To address the above issues, the embodiments of the present disclosure provide a method for wireless communication, the terminal device, and the network device that ensure that the terminal device can communicate with other networks based on energy-saving information of an energy-saving network, or ensure that other networks can configure the terminal device based on energy-saving information of the energy-saving network, thereby avoiding the impact of the energy-saving network on the terminal device in performing operations in other networks.

The following describes the method embodiments of the present disclosure with reference to the accompanying drawings. FIG. 4 is a schematic flowchart of the method FOR wireless communication provided in an embodiment of the present disclosure. The method shown in FIG. 4 is described from the perspective of the interaction between the terminal device and the first network device.

The terminal device may be, for example, the terminal device 120 or the terminal device 210 mentioned above. In some embodiments, the terminal device may perform related operations across multiple networks. For brevity, the following description illustrates the terminal device performing related operations in a network corresponding to a first network device and a network corresponding to a second network device, but this is not intended to limit the terminal device to performing related operations in only two networks. The first network device or the second network device may be, for example, the network device 110 mentioned above.

In some embodiments, the terminal device may support a multi-SIM technology. The multiple SIM cards supported by the terminal device may belong to the same PLMN or operator, or may belong to different PLMNs or operators.

In some embodiments, a plurality of networks corresponding to the terminal device may be networks of the same PLMN or operator. For example, the network corresponding to the first network device and the network corresponding to the second network device may be networks of the same PLMN or operator.

In some embodiments, the plurality of networks corresponding to the terminal device may be networks of different PLMNs or operators. For example, the network corresponding to the first network device and the network corresponding to the second network device may be networks of different PLMNs or operators.

In some embodiments, the terminal device may be in the RRC connected state in the first network device. In this case, the first network device may configure the terminal device, or the first network device may communicate with the terminal device, e.g., to transmit data.

In some embodiments, the terminal device may be in the RRC idle state or RRC connected state in the second network device. In this case, the terminal device may need to periodically perform certain operations in the network corresponding to the second network device, such as receiving paging, measuring signals of the camping cell/other frequency points, determining whether to perform cell reselection, etc.

In some embodiments, the terminal device may be in the RRC connected state in the second network device. In this case, the terminal device may need to communicate with the second network device, e.g., to transmit data.

In some embodiments, partial network devices among the first network device and the second network device may be in an energy-saving state (also referred to as energy-saving mode). In other words, partial network devices among the first network device and the second network device may take energy-saving measures. For example, the first network device may be in the energy-saving state, or the second network device may be in the energy-saving state, or both the first network device and the second network device may be in the energy-saving state.

In some embodiments, the network device mentioned in the present disclosure being in the energy-saving state may refer to that the network device performs certain operations to reduce energy consumption, in which case the network device is referred to as the network device in the energy-saving state. Exemplarily, when the network device is in the energy-saving state, it may perform one or more of the following operations to reduce energy consumption: not receiving uplink, not sending downlink, and not receiving uplink and not sending downlink. In other words, when the network device is in the energy-saving state, it may refrain from performing one or more of the following operations to reduce energy consumption: receiving uplink, sending downlink, and receiving uplink and sending downlink.

As an example, when the network device is in the energy-saving state, it may perform one or more of the following operations to reduce energy consumption: not sending downlink data, not receiving uplink data, not sending downlink reference signals, not sending dynamically scheduled downlink data (semi-statically scheduled downlink data may still be sent), not receiving dynamically scheduled uplink data (semi-statically scheduled uplink data may still be received), and not receiving uplink reference signals (e.g., sounding reference signal (SRS)), etc. In other words, when the network device is in the energy-saving state, it may refrain from performing one or more of the following operations to reduce energy consumption: sending downlink data, receiving uplink data, sending downlink reference signals, sending dynamically scheduled downlink data (semi-statically scheduled downlink data may still be sent), and receiving dynamically scheduled uplink data (semi-statically scheduled uplink data may still be received), etc.

In some embodiments, the "not sending reference signals" or "not receiving reference signals" mentioned in the present disclosure may refer to the situation where the network device, when in the energy-saving state, does not send certain reference signals or does not receive certain reference signals. That is to say, when the network device is in the energy-saving state, it may not send or receive certain downlink reference signals, but other reference signals, except for the certain ones, may still be sent or received. Taking "not sending downlink reference signals" mentioned in the present disclosure as an example, when the network device is in the energy-saving state, it may not send certain downlink reference signals, but other reference signals (except for the certain ones) may still be sent. As an example, when the network device is in the energy-saving state, it may not send demodulation reference signals (DM-RS), but may send synchronization signal and PBCH block (SSB).

In some embodiments, the "not sending reference signals" or "not receiving reference signals" mentioned in the present disclosure may refer to the situation where the network device, when in the energy-saving state, sends or receives certain reference signals in a relatively sparse manner in a time domain. Taking "not sending downlink reference signals" mentioned in the present disclosure as an example, when the network device is in the energy-saving state, it may send downlink reference signals in a relatively sparse manner in the time domain. As an example, when the network device is not in the energy-saving state, the SSB is sent every 20 ms; and when the network device is in the energy-saving state, the SSB is sent at intervals greater than 20 ms (e.g., 30 ms, 40 ms, etc.).

In some embodiments, the "not sending reference signals" or "not receiving reference signals" mentioned in the present disclosure may refer to the situation where the network device, when in the energy-saving state, sends or receives certain reference signals in a relatively sparse manner in a frequency domain. Taking "not receiving uplink reference signals" mentioned in the present disclosure as an example, when the network device is in the energy-saving state, it may receive uplink reference signals in a relatively sparse manner in the frequency domain. As an example, when the network device is in the energy-saving state, a width of a frequency domain of the SRS may be reduced to receive the SRS.

For brevity, the technical solution of the present disclosure is introduced with the second network device being in the energy-saving state. The solution for the first network device being in the energy-saving state is similar, which is not further elaborated in the present disclosure.

The method shown in FIG. 4 includes operation S410, which is described in detail below.

At operation S410, a terminal device sends first information to a first network device.

In some embodiments, the first information is determined based on energy-saving information of a second network device. In other words, the first information is generated based on the energy-saving information of the second network device.

In some embodiments, the first information is associated with the energy-saving information of the second network device. For example, the first information may be used to indicate the energy-saving information of the second network device, or the first information may be used to indicate information related to the energy-saving information of the second network device.

In some embodiments, the first information may include the energy-saving information of the second network device.

In some embodiments, the energy-saving information of the second network device may include information of one or more time windows.

In some embodiments, after the terminal device sends the energy-saving information of the second network device to the first network device, the first network device may configure the terminal device or communicate with the terminal device based on the energy-saving information of the second network device. In other words, the terminal device may notify the first network device of the energy-saving information of the second network device to avoid resource wastage or improve communication performance (e.g., improving data transmission rate, etc.) between the terminal device and the first network device. As an example, the terminal device may request or suggest to the first network device which time window is unsuitable for configuring the GAP, allowing the first network device to configure an appropriate GAP for the terminal device, which avoids resource wastage. The reason the terminal device can request or suggest which time window is unsuitable for configuring the GAP is that even if the time window is configured as the GAP, the terminal device will not be able to perform related operations (e.g., receiving paging messages, performing measurements, etc.) in the network corresponding to the second network device during that time window.

In some embodiments, after the terminal device sends capability information corresponding to the terminal device when the second network device is in the energy-saving state to the first network device, the first network device may communicate with the terminal device based on the capability information sent by the terminal device to avoid resource wastage or improve the communication performance (e.g., improving data transmission rate, etc.) between the terminal device and the first network device. As an example, the terminal device may indicate to the first network device a correspondence between time windows and the UE's capabilities, so that the first network device can adopt a capability configuration that is close to the UE to communicate with the terminal device, thereby improving communication performance between the first network device and the terminal device.

In some embodiments, when the terminal device is in a multi-SIM connection state, the terminal device notifies energy-saving information or information related to the energy-saving information of one network device corresponding to the multiple SIM cards to the other network device corresponding to the multiple SIM cards.

In some embodiments, the first information may be used for the first network device to configure the terminal device. For example, the first information may be used to indicate that no GAP is configured within one or more time windows, or the first information may be used to indicate to the first network device that no GAP is configured within one or more time windows. In other words, the first network device may configure the GAP for the terminal device based on the first information.

In some embodiments, after the first network device configures a GAP for the terminal device, the first network device does not communicate with the terminal device within the GAP, allowing the terminal device to perform related operations in the network corresponding to the second network device during that GAP.

In some embodiments, the above GAP is used for the terminal device to perform operations in the network corresponding to the second network device, such as receiving paging messages, performing measurements, etc.

In some embodiments, when the first network device configures the GAP for the terminal device, it may consider the first information sent by the terminal device. In some embodiments, when the first network device configures the GAP for the terminal device, it may not consider the first information sent by the terminal device, which is not limited in the present disclosure. That is to say, in the embodiments of the present disclosure, the GAP ultimately configured by the first network device for the terminal device depends on the implementation of the first network device, and the UE only has a suggestion authority, without the final decision-making authority.

In some embodiments, the first information may be used for communication between the first network device and the terminal device. For example, the first information may be used to notify the first network device of capability information of the terminal device corresponding to one or more time windows. Alternatively, the first network device may determine a first capability of the terminal device based on the first information, where the first capability is used to indicate the capability of the terminal device when the second network device is in an energy-saving state, so that the first network device can communicate (e.g., transmit data) with the terminal device based on the first capability when the second network device is in the energy-saving state.

Regarding the use of the first information for the first network device to configure the terminal device or for communication between the first network device and the terminal device, detailed descriptions are provided in conjunction with specific embodiments below. For brevity, this is not elaborated upon here.

The embodiments of the present disclosure do not impose specific limitations on a carrying mode of the first information. Exemplarily, in some embodiments, the first information may be sent via UE assistance information, or the first information may be carried in the UE assistance information.

In some embodiments, the first information is optional information in the UE assistance information. For example, when the terminal device determines to request a GAP from the first network device based on the energy-saving information of the second network device or to report UE capability to the first network device based on the energy-saving information of the second network device, the terminal device may carry the first information in the UE assistance information.

In some embodiments, the terminal device may not carry the first information in the UE assistance information. For example, the terminal device may not carry the first information in the UE assistance information in one or more of the following situations: the second network device being not in the energy-saving state, the second network device being not an energy-saving network device, the second network device not adopting time-based energy-saving measures, the second network device adopting time-based energy-saving measures but the terminal device having not obtained the energy-saving information (such as information of one or more time windows mentioned later) of the second network device, the second network device having obtained the energy-saving information of the second network device but deciding not to send the first information to the first network device, etc.

In some embodiments, the above UE assistance information may be carried in RRC signaling. That is to say, the first information may be sent via the UE assistance information in RRC signaling, or the first information may be carried in the UE assistance information in RRC signaling. Of course, this is not limited in the embodiments of the present disclosure, in some embodiments, the UE assistance information may also be carried in other signaling outside of RRC signaling.

In some embodiments, the first information may be sent via one or both of RRC signaling and medium access control control element (MAC CE) signaling. Alternatively, the first information may be carried in one or both of RRC signaling and MAC CE signaling.

As mentioned above, in some embodiments, the first information may be carried in the UE assistance information in RRC signaling. In some embodiments, the first information may be carried in other RRC signaling, i.e., the first information may be carried in the RRC signaling other than the UE assistance information.

In some embodiments, the first information may be carried in MAC CE signaling.

In some embodiments, the first information may be indicated via RRC signaling and MAC CE signaling. For example, RRC signaling may be used to indicate multiple sets of energy-saving information (such as information of a plurality of time windows) of the second network device, and MAC CE signaling may be used to dynamically indicate which specific set of energy-saving information from the multiple sets is being applied by the second network device at a current moment. Alternatively, RRC signaling may be used to indicate a correspondence between multiple sets of time windows and UE capabilities, and MAC CE signaling may be used to dynamically indicate a correspondence between a time window currently used by the second network device and the UE capability. Alternatively, RRC signaling may be used to indicate detailed information about multiple capabilities, and MAC CE signaling may be used to dynamically indicate which specific UE capability is being used for communication.

In some embodiments, the sending or updating of the first information is triggered based on a timer. In other words, in some embodiments, after the terminal device sends the first information to the first network device, it may start or restart a timer. During the operation of the timer, the terminal device may no longer send or update the first information to the first network device. After the timer expires, the terminal device may send or update the first information to the first network device again.

Embodiments of the present disclosure do not impose specific limitations on a time length of the timer. For example, the time length of the timer may be at a slot level, such as 2 slots. Alternatively, the time length of the timer may be at a symbol level, such as 14 symbols. Alternatively, the time length of the timer may be at a millisecond level, such as 1 millisecond, etc.

Embodiments of the present disclosure do not impose specific limitations on the configuration of the time length. Exemplarily, the time length of the timer may be configured by the first network device. Alternatively, the time length of the timer may be specified by the protocol, etc.

In the embodiments of the present disclosure, in scenarios where the terminal device needs to perform related operations across multiple networks, the terminal device is able to send the first information to the first network device based on the energy-saving information of the second network device, in order to request the first network device to configure the terminal device or communicate with the terminal device. That is to say, when the terminal device sends the first information to the first network device, it considers the energy-saving information of the second network device, thus avoiding the impact of the energy-saving measures of the second network device on the terminal device in performing related operations in the network corresponding to the first network device.

As mentioned above, the first information may be determined based on the energy-saving information of the second network device. The following describes the energy-saving information of the second network device.

In some embodiments, the energy-saving information may include various types of information. For example, the energy-saving information may include one or more of: whether the second network device is energy-saving, an energy-saving time of the second network device, an energy-saving power of the second network device, an energy-saving mode of the second network device, etc. In other words, in the embodiments of the present disclosure, there are multiple ways to indicate (represent) the energy-saving information, which is not limited in the embodiments of the present disclosure, as long as the energy-saving information can be used to indicate that the second network device is in the energy-saving state.

As an example, the energy-saving information may include whether the second network device is energy-saving. Exemplarily, the energy-saving information may utilize 1-bit information for indicating. When the bit indicates "1" or "yes," it means the second network device is energy-saving; and when the bit indicates "0" or "no," it means the second network device is not energy-saving. Of course, this is not limited in the embodiments of the present disclosure. For example, when the bit indicates "1" or "yes," it may mean the second network device is not energy-saving; and when the bit indicates "0" or "no," it may mean the second network device is energy-saving.

As another example, the energy-saving information may include the energy-saving time of the second network device. For example, the energy-saving information may be used to indicate a time period (time window) during which the second network device is energy-saving, i.e., the second network device is in the energy-saving state during the time period indicated by the energy-saving information.

In some embodiments, the energy-saving information may use frame numbers, subframe numbers, etc., to indicate the time period during which the second network device is energy-saving.

In some embodiments, when the energy-saving information uses frame numbers, subframe numbers, etc., to indicate the time period during which the second network device is energy-saving, the frame numbers and subframe numbers used for the energy-saving information may be those of the first network device.

As yet another example, the energy-saving information may include the energy-saving power of the second network device. For example, the energy-saving information may be used to indicate the energy-saving power of the second network device, i.e., the second network device may communicate with the terminal device based on the corresponding energy-saving power when the second network device is in the energy-saving state.

As yet another example, the energy-saving information may include the energy-saving mode of the second network device. For example, the energy-saving information may be used to indicate that the second network device is in one of a micro-sleep mode, light sleep mode, or deep sleep mode. In some embodiments, when the second network device is in different energy-saving modes, energy-saving operations it performs may differ. For example, when the second network device is in the micro-sleep mode, it may stop sending over a physical downlink control channel (PDCCH) and a physical downlink shared channel (PDSCH) and may also stop receiving over a physical uplink shared channel (PUSCH). When the second network device is in the light sleep mode, it may stop sending over PDCCH, PDSCH, and channel state information-reference signals (CSI-RS) and may also stop receiving over PUSCH and SRS. When the second network device is in the deep sleep mode, it may stop sending any downlink signals and stop receiving any uplink signals.

As yet another example, the energy-saving information may include whether the second network device is energy-saving and the energy-saving time of the second network device. Alternatively, the energy-saving information may include the energy-saving time, energy-saving power, energy-saving mode, etc., of the second network device. For brevity, the embodiments of the present disclosure do not enumerate each case individually.

In some embodiments, the energy-saving information may include information of one or more time windows (also referred to as one or more time periods). The second network device is in the energy-saving state during the one or more time windows. For example, in cases where the second network device adopts time-based energy-saving measures, the energy-saving information of the second network device may include information of the one or more time windows. In some embodiments, the one or more time windows may also be referred to as energy-saving time windows.

As a result, the terminal device may determine, based on the information of the one or more time windows, during which time windows the second network device is unable to communicate with the terminal device or during which time windows the second network device can only communicate with the terminal device at a lower capability. This allows the first network device to avoid configuring these time windows as GAPs for the terminal device or to take information of these time windows into account when configuring the GAP for the terminal device, or facilitates communication between the first network device and the terminal device based on a higher capability of the terminal device during these time windows.

However, the embodiments of the present disclosure are not limited to this. In some embodiments, the energy-saving information may further include other information, such as the energy-saving power of the second network device, the energy-saving mode of the second network device, etc.

In some embodiments, the information of the one or more time windows is predictable. That is to say, the terminal device is able to determine during which time periods the second network device is in the energy-saving state. Furthermore, the first network device is also able to determine during which time periods the second network device is in the energy-saving state.

In some embodiments, the second network device may perform one or more of the following operations in the one or more time windows: not sending reference signals, not receiving reference signals, not sending paging messages, not receiving uplink signals, not sending downlink signals, not sending dynamically scheduled downlink data, not receiving dynamically scheduled uplink data, not sending downlink reference signals, etc.

In some embodiments, when the energy-saving information includes information of the one or more time windows, the capability information corresponding to the terminal device when the second network device is in the energy-saving state may be indicated via the correspondence between the one or more time windows and one or more capabilities. In other words, the capability information of the terminal device corresponding to the one or more time windows may be indicated via the correspondence between the one or more time windows and one or more capabilities.

In some embodiments, one or more time windows may correspond to one capability. As a result, during the one or more time windows, the terminal device may communicate with the first network device based on that one capability.

In some embodiments, a plurality of time windows may correspond to a plurality of capabilities. Thus, a capability corresponding to a time window may be determined based on information of the time window, so that the terminal device communicates with the first network device based on the capability corresponding to the time window during the time window.

In the case where the plurality of time windows correspond to the plurality of capabilities, in some embodiments, the plurality of time windows may be in one-to-one correspondence with the plurality of capabilities, meaning that each time window among the plurality of time windows may correspond to one capability. In some embodiments, the plurality of time windows and the plurality of capabilities may have a many-to-one relationship, meaning that at least one time window among the plurality of time windows may correspond to one capability.

In some embodiments, the terminal device may indicate different UE capabilities for different time windows. That is to say, the plurality of capabilities corresponding to the plurality of time windows may be different, or may be partially different.

In some embodiments, when the energy-saving information includes information of the plurality of time windows, the plurality of time windows do not overlap with each other.

In some embodiments, when the energy-saving information includes information of the plurality of time windows, there may be overlaps between partial time windows among the plurality of time windows.

In some embodiments, if there is overlap between the partial time windows among the plurality of time windows, the terminal device and the first network device may communicate based on a lowest capability of capabilities corresponding to the overlapped partial time windows. For example, the plurality of time windows include a first time window, a second time window, and a third time window, with a terminal device capability (referred to as capability) corresponding to the first time window being Capability A, a capability corresponding to the second time window being Capability B, and a capability corresponding to the third time window being Capability C, and with Capability A < Capability B < Capability C, then in the case where the first and second time windows partially overlap, the terminal device and the first network device may communicate based on Capability A, because the Capability A corresponding to the first time window is lower than the Capability B corresponding to the second time window.

However, the embodiments of the present disclosure are not limited to this. In some embodiments, when there is overlap between partial time windows among the plurality of time windows, the terminal device and the first network device may communicate based on a highest capability, or an average capability, etc. of capabilities corresponding to the overlapped partial time windows.

In some embodiments, when the terminal device and the first network device communicate based on the highest capability of capabilities corresponding to the overlapped partial time windows, the terminal device needs to notify the second network device.

The present disclosure does not specifically limit the method of indicating one or more time windows. For example, the one or more time windows may be indicated by a "period + duration" method, or the one or more time windows may be indicated by a "start time (or start moment) + duration" method, etc.

In some embodiments, if it is required to indicate the start time of the one or more time windows, there are multiple methods for indicating the start time, which are not limited in the embodiments of the present disclosure. For example, the start time of the one or more time windows may be indicated via a position of a time-domain resource unit such as hyperframe number/frame number/subframe number/slot number, etc. As an example, the start time of the one or more time windows may be indicated via a position of a time-domain resource unit such as hyperframe number/frame number/subframe number/slot number corresponding to the first network device. Alternatively, the start time of the one or more time windows may be indicated using coordinated universal time (UTC), etc.

In some embodiments, if it is required to indicate the duration of the one or more time windows, there are multiple methods for indicating the duration, which are not limited in the embodiments of the present disclosure. For example, the duration of the one or more time windows may be indicated by a number of time-domain resource units such as a number of subframes, a number of slots, etc. Alternatively, the duration of the one or more time windows may be indicated using time units such as milliseconds, seconds, etc.

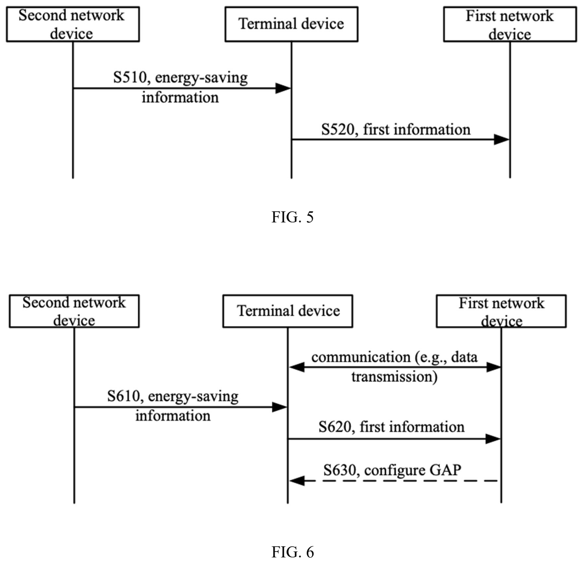

In some embodiments, the energy-saving information is obtained from the second network device. Refer to FIG. 5, which is another schematic flowchart of a method for wireless communication provided in an embodiment of the present disclosure. The method shown in FIG. 5 may include operations S510 and S520.

At operation S510, the second network device sends the energy-saving information of the second network device to the terminal device.

In some embodiments, the second network device may actively send the energy-saving information to the terminal device.

In some embodiments, the second network device may send the energy-saving information to the terminal device based on a request from the terminal device.

For details regarding the energy-saving information, please refer to the previous description. For brevity, it will not be reiterated here.

At operation S520, the terminal device sends the first information to the first network device.

The first information is determined based on the energy-saving information of the second network device. For detailed information regarding operation S520, please refer to the previous introduction of operation S410. For brevity, it will not be reiterated here.

As mentioned above, the first network device may configure the terminal device based on the first information, or the first network device may communicate with the terminal device based on the first information. The following will introduce this in detail by combining Embodiment 1 and Embodiment 2.

Embodiment 1: The First Information is Used to Request the First Network Device to Configure GAP
In Embodiment 1, the terminal device may send the first information to the first network device. The first information may be used to request the first network device to configure a GAP for the terminal device, and the GAP is used for the terminal device to perform related operations in the network corresponding to the second network device.

As an implementation, the terminal device may request the first network device to avoid configuring one or more time windows as GAP, or to avoid configuring GAP in the one or more time windows.

In Embodiment 1, the terminal device is in the RRC connected state in the network corresponding to the first network device and may communicate with the first network device, such as transmitting data. The terminal device is in the RRC idle state or RRC inactive state in the network corresponding to the second network device.

The following describes Embodiment 1 in detail in combination with FIG. 6.

FIG. 6 is another schematic flowchart of a method for wireless communication provided in an embodiment of the present disclosure. As shown in FIG. 6, the method shown may include operations S610 and S620.

At operation S610, the terminal device obtains energy-saving information from the second network device.

For example, the terminal device may obtain information of one or more time windows from the second network device, during which the second network device is in an energy-saving state. In some embodiments, the one or more time windows may also be referred to as energy-saving time windows.

For details regarding the energy-saving information, please refer to the previous description.

At operation S620, the terminal device sends the first information to the first network device.

In some embodiments, the first information may be used to request the first network device to avoid configuring one or more time windows as GAP.

In some embodiments, the first information includes information of the one or more time windows. Alternatively, the first information includes information of the one or more energy-saving time windows.

If the terminal device learns that the second network device is in the energy-saving state during some time windows, the terminal device may request the first network device to "not configure these time windows as GAP" or "not configure GAP in these time windows." This is because, even if these time windows are configured as GAP, the terminal device is not able to perform measurements, receive paging messages, etc., in the network corresponding to the second network device during these time windows.

For example, if the terminal device learns that the second network device is performing one or more of the following operations during some time windows to save energy, the terminal device may request the first network device to "not configure these time windows as GAP": not sending reference signals, not sending paging messages, not receiving uplink signals, not sending dynamically scheduled downlink data, not receiving dynamically scheduled uplink data, etc.

In some embodiments, the terminal device may send the first information to the first network device via UE assistance information.

In some embodiments, the first information in UE assistance information is optional. For example, the terminal device may not carry the first information in the UE assistance information in one or more of the following cases: the second network device being not an energy-saving network device, the second network device not adopting time-based energy-saving measures, the second network device adopting time-based energy-saving measures but the terminal device having not obtained information of the energy-saving time windows, and the terminal device having obtained the information of the energy-saving time windows but deciding not to send the first information to the first network device.

In some embodiments, the terminal device may send the first information to the first network device via other RRC signaling.

In some embodiments, the terminal device may indicate the energy-saving information of the second network device to the first network device via RRC signaling and MAC CE signaling. For example, the terminal device may send information of multiple sets (e.g., 4 sets) of the energy-saving time windows to the first network device via RRC signaling and dynamically indicate "which set of energy-saving time windows the second network device should currently adopt" via MAC CE signaling.

Continuing with reference to FIG. 6, in some embodiments, the method shown in FIG. 6 may further include operation S630. At operation S630, the first network device configures the GAP for the terminal device based on the first information.

In some embodiments, when the first network device determines the GAP configuration, it may consider the first information sent by the UE or may not consider it, which is not limited in the embodiments of the present disclosure.

In some embodiments, after the terminal device sends the first information to the first network device, it may start or restart a timer. During the operation of the timer, the terminal device cannot send the first information to the first network device again. After the timer expires, the terminal device may send the first information to the first network device again.

In some embodiments, a time length of the above timer may be configured by the first network device or may be specified by the protocol.

Embodiment 2: The First Information is Used to Send the First Capability to the First Network Device
In Embodiment 2, the terminal device may send the first information to the first network device. The first information may be used to send the first capability to the first network device, and the first capability is used to indicate the capability of the terminal device when the second network device is in the energy-saving state.

As an implementation, the terminal device may send information of the capability corresponding to one or more time windows (energy-saving time windows) to the first network device.

In Embodiment 2, the terminal device is in the RRC connected state both in the network corresponding to the first network device and in the network corresponding to the second network device. The terminal device may communicate with the first network device (e.g., transmit data) and may also communicate with the second network device.

In Embodiment 2, if the terminal device learns that the second network device is in the energy-saving state (e.g., the second network device is an energy-saving network device), and that the second network device cannot perform transmission or can only transmit using limited frequency domain resources/time domain resources/number of antennas/power during certain time windows, the terminal device may notify the first network device about the freed-up UE capability.

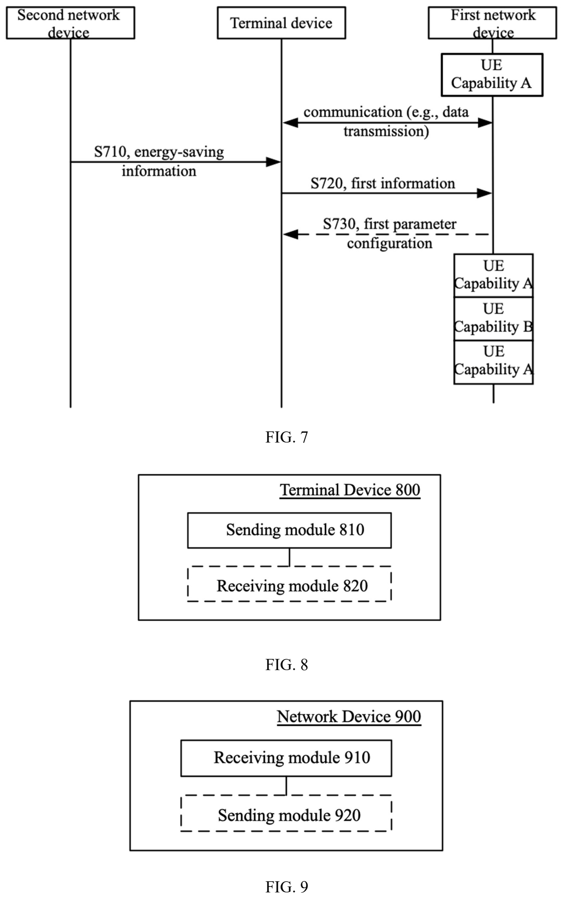

The following describes Embodiment 2 in detail with reference to FIG. 7.

FIG. 7 is another schematic flowchart of a method for wireless communication provided in an embodiment of the present disclosure. As shown in FIG. 7, the method shown may include operations S710 and S720.

At operation S710, the terminal device obtains energy-saving information from the second network device.

For example, the terminal device may obtain information of the one or more time windows from the second network device, during which the second network device is in the energy-saving state. In some embodiments, the one or more time windows may also be referred to as energy-saving time windows.

For details regarding the energy-saving information, please refer to the previous description.

At operation S720, the terminal device sends the first information to the first network device.

In some embodiments, the first information may be used to send the first capability to the first network device. For example, the first information may be used to indicate that during certain time windows, the UE capability is the first capability (e.g., Capability B in FIG. 7).

In some embodiments, the first information may be used to indicate the UE capability corresponding to one or more time windows to the first network device. That is, the first information includes the correspondence between time windows and UE capabilities. Alternatively, the first information includes the correspondence between one or more time windows and one or more UE capabilities.

In some embodiments, the terminal device may indicate different UE capabilities for different time windows. In the example of FIG. 7, the terminal device corresponds to Capability B during an energy-saving time window and Capability A during non-energy-saving time windows. In fact, the terminal device may indicate or report multiple (e.g., N, where N ≥ 2) different UE capabilities.

In some embodiments, if the terminal device reports multiple sets of energy-saving time windows, with overlaps between the multiple sets of time windows and each set of time windows corresponding to a different UE capability, then when there is overlap between the time windows, the terminal device and the first network device may communicate based on the lowest UE capability (i.e., a lowest UE capability of the multiple UE capabilities corresponding to the overlapped time windows).

In some embodiments, the terminal device may use RRC signaling and MAC CE signaling to indicate the UE capability to the first network device. For example, the terminal device may report the details of multiple capabilities (such as Capability A and Capability B in FIG. 7) through RRC signaling and dynamically indicate which UE capability is currently being used for communication via MAC CE signaling.

In some embodiments, the method shown in FIG. 7 may further include operation S730. At operation S730, the first network device sends a first parameter configuration to the terminal device. The first parameter configuration is determined based on the first information.

In some embodiments, the first parameter configuration is used for communication between the terminal device and the first network device based on the first parameter configuration.

In some embodiments, the first network device may use RRC signaling and MAC CE signaling to indicate the first parameter configuration to the terminal device. For example, the first network device may pre-configure multiple parameters via RRC signaling, such as configuring wireless parameters for Capability A and Capability B as shown in FIG. 7, and may indicate which set of wireless parameters the terminal device should use for communication via MAC CE signaling.

The method embodiments of the present disclosure are described in detail above with reference to FIG. 1 to FIG. 7, the following describes the apparatus embodiments of the present disclosure in detail with reference to FIG. 8 to FIG. 11. It should be understood that descriptions of the method embodiments correspond to descriptions of the apparatus embodiments, so the parts that are not described in detail may be referred to in the method embodiments described above.

FIG. 8 is a schematic structural diagram of the terminal device provided in an embodiment of the present disclosure. The terminal device 800 shown in FIG. 8 may include a sending module 810. The sending module 810 may be configured to send first information to a first network device, where the first information is used to indicate to the first network device that no gap is configured in one or more time windows.

Optionally, in the one or more time windows, a second network device is in an energy-saving state, and the gap is used for the terminal device to perform an operation in a network corresponding to the second network device.

Optionally, when the second network device is in the energy-saving state, the second network device performs one or more of: not receiving uplink; not sending downlink; and not receiving uplink and not sending downlink.

Optionally, the first information includes energy-saving information of the second network device, and the energy-saving information of the second network device includes information of the one or more time windows.

Optionally, the first information is used to notify the first network device of the capability information of the terminal device corresponding to the one or more time windows.

Optionally, the capability information of the terminal device corresponding to the one or more time windows is indicated by a correspondence between the one or more time windows and one or more capabilities.

Optionally, the first information is generated based on the energy-saving information of the second network device.

Optionally, partial time windows among a plurality of time windows overlap.

Optionally, when the partial time windows among the plurality of time windows overlap, the terminal device communicates with the first network device based on a lowest capability of capabilities corresponding to the partial time windows.

Optionally, the terminal device 800 further includes: a receiving module 820, configured to receive a first parameter configuration sent by the first network device, where the first parameter configuration is determined based on the first information.

Optionally, the first information is sent via terminal device assistance information.

Optionally, the first information is sent via one or both of RRC signaling and MAC CE signaling.

Optionally, the energy-saving information is obtained from the second network device.

Optionally, the sending or updating of the first information is triggered based on a timer.

Optionally, the terminal device supports a multi-SIM technology.

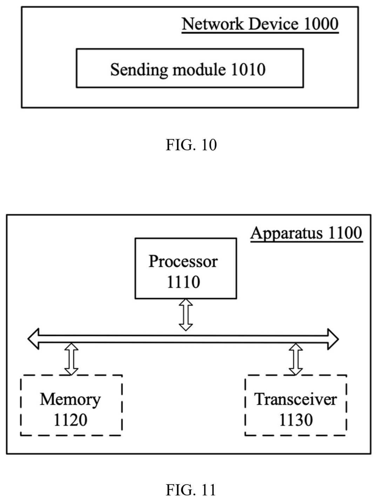

Optionally, the sending module 810 may be a transceiver 1130. The terminal device 800 may further include a processor 1110 and a memory 1120, as shown in FIG. 11.

FIG. 9 is a schematic structural diagram of the network device provided in an embodiment of the present disclosure. The network device shown in FIG. 9 may be any of the first network devices mentioned above. The network device 900 may include a receiving module 910.

The receiving module 910 may be configured to receive first information sent by a terminal device, where the first information is used to indicate to the first network device that no gap is configured in one or more time windows.

Optionally, in the one or more time windows, the second network device is in an energy-saving state, and the gap is used for the terminal device to perform an operation in a network corresponding to the second network device.

Optionally, when the second network device is in the energy-saving state, the second network device performs one or more of: not receiving uplink; not sending downlink; and not receiving uplink and not sending downlink.

Optionally, the first information includes energy-saving information of the second network device, where the energy-saving information of the second network device includes information of the one or more time windows.

Optionally, the first information is used to notify the first network device of capability information of the terminal device corresponding to the one or more time windows.

Optionally, the capability information of the terminal device corresponding to the one or more time windows is indicated by a correspondence between the one or more time windows and one or more capabilities.

Optionally, the first information is generated according to the energy-saving information of the second network device.

Optionally, partial time windows among a plurality of time windows overlap.

Optionally, when the partial time windows among the plurality of time windows overlap, the terminal device communicates with the first network device based on a lowest capability of capabilities corresponding to the partial time windows.

Optionally, the network device 900 further includes: a sending module 920, configured to send a first parameter configuration to the terminal device, where the first parameter configuration is determined based on the first information.

Optionally, the first information is sent via terminal device assistance information.

Optionally, the first information is sent via one or both of RRC signaling and MAC CE signaling.

Optionally, the energy-saving information is obtained from the second network device.

Optionally, the sending or updating of the first information is triggered based on a timer.

Optionally, the terminal device supports a multi-SIM technology.

Optionally, the receiving module 910 may be a transceiver 1130. The network device 900 may further include a processor 1110 and a memory 1120, as shown in FIG. 11.

FIG. 10 is another schematic structural diagram of the network device provided in an embodiment of the present disclosure. The network device shown in FIG. 10 may be any of the second network devices mentioned above. The network device may include a sending module 1010.

The sending module 1010 may be configured to send energy-saving information of the second network device to the terminal device, where the energy-saving information is used for the terminal device to determine first information, and the first information is used to indicate to the first network device that no gap is configured in one or more time windows.

Optionally, in the one or more time windows, the second network device is in an energy-saving state, and the gap is used for the terminal device to perform an operation in a network corresponding to the second network device.

Optionally, when the second network device is in the energy-saving state, the second network device performs one or more of: not receiving uplink; not sending downlink; and not receiving uplink and not sending downlink.

Optionally, the first information includes the energy-saving information of the second network device, where the energy-saving information of the second network device includes information of the one or more time windows.

Optionally, the first information is used to notify the first network device of capability information of the terminal device corresponding to the one or more time windows.

Optionally, the capability information of the terminal device corresponding to the one or more time windows is indicated by a correspondence between the one or more time windows and one or more capabilities.

Optionally, the first information is generated according to the energy-saving information of the second network device.

Optionally, partial time windows among a plurality of time windows overlap.

Optionally, when the partial time windows among the plurality of time windows overlap, the terminal device communicates with the first network device based on a lowest capability of capabilities corresponding to the partial time windows.

Optionally, the first information is sent via terminal device assistance information.

Optionally, the first information is sent via one or both of RRC signaling and MAC CE signaling.

Optionally, the sending or updating of the first information is triggered based on a timer.

Optionally, the terminal device supports a multi-SIM technology.

Optionally, the sending module 1010 may be a transceiver 1130. The network device 1000 may further include a processor 1110 and a memory 1120, as shown in FIG. 11.

FIG. 11 is a schematic structural diagram of an apparatus for communication according to an embodiment of the present disclosure. The dashed line in FIG. 11 indicates that the unit or module is optional. The apparatus 1100 may be configured to implement the method described in the foregoing method embodiments. The apparatus 1100 may be one or more of a chip, a terminal device, or a network device.

The apparatus 1100 may include one or more processors 1110, and the processor 1110 may support the apparatus 1100 to implement the method described in the foregoing method embodiments. The processor 1110 may be a general-purpose processor or a dedicated processor. For example, the processor may be a central processing unit (CPU). Alternatively, the processor may be another general-purpose processor, a digital signal processor (DSP), an application specific integrated circuit (ASIC), a field programmable gate array (FPGA) or other programmable logic devices, a discrete gate or transistor logic device, a discrete hardware component, or the like. The general-purpose processor may be a microprocessor, or the processor may be any conventional processor or the like.

The apparatus 1100 may further include one or more memories 1120 storing a program, and the program may be executed by the processor 1110 to cause the processor 1110 to perform the method described in the foregoing method embodiments. The memory 1120 may be independent of the processor 1110 or may be integrated into the processor 1110.

The apparatus 1100 may further include a transceiver 1130, and the processor 1110 may communicate with another device or chip via the transceiver 1130. For example, the processor 1110 may perform data transceiving with another device or chip via the transceiver 1130.

Embodiments of the present disclosure further provide a computer-readable storage medium, configured to store a program. The computer-readable storage medium may be applied to the terminal or network device provided in the embodiments of the present disclosure, and the program causes the computer to perform the method performed by the terminal or network device in the embodiments of the present disclosure.

Embodiments of the present disclosure further provide a computer program product. The computer program product includes a program. The computer program product may be applied to the terminal or network device provided in the embodiments of the present disclosure, and the program causes the computer to perform the method performed by the terminal or network device in the embodiments of the present disclosure.

Embodiments of the present disclosure further provide a computer program. The computer program may be applied to the terminal or network device provided in the embodiments of the present disclosure, and the computer program causes the computer to perform the method performed by the terminal or network device in the embodiments of the present disclosure.

It should be understood that the terms "system" and "network" may be used interchangeably in the present disclosure. In addition, the terms used in the present disclosure are intended only to explain specific embodiments of the present disclosure and are not intended to limit the present disclosure. The terms "first", "second", "third" and "fourth" in the description and claims as well as the accompanying drawings of the present disclosure are used to distinguish between different objects and not to describe a particular order. Furthermore, the terms "including" and "having", and any variation thereof, are intended to cover non-exclusive inclusion.

In the embodiments of the present disclosure, the term "indication" mentioned in the embodiments of the present disclosure may be a direct indication, or may be an indirect indication, or may indicate that there is an association relationship. For example, A indicates B, which may indicate that A directly indicates B, e.g., B is obtained through A, or may indicate that A indirectly indicates B, e.g., A indicates C and B is obtained through C, or may indicate that A and B have an association relationship.

In the embodiments of the present disclosure, "B corresponding to A" indicates that B is associated with A, and B may be determined based on A. However, it should be further understood that, determining B based on A does not mean that B is determined only based on A, or B may also be determined based on A and/or other information.

In the embodiments of the present disclosure, the term "corresponding" in the embodiments of the present disclosure may indicate that there is a direct correspondence or indirect correspondence between the two, or may indicate that there is an association relationship between the two, or may be relationships such as indicating and being indicated, configuring and being configured, etc.

In the embodiments of the present disclosure, "including" may indicate either directly or indirectly including. Optionally, references to "including" in embodiments of the present disclosure may be replaced with "indicating" or "used to determine". For example, A including B may be replaced with A indicating B or A used to determine B.

In the embodiments of the present disclosure, the terms "predefined" and "preconfigured" may be implemented by pre-storing a corresponding code, a table, or another manner that can be used to indicate related information in a device (e.g., a terminal device and a network device), and a specific implementation is not limited in the present disclosure. For example, the predefined may indicate being defined in a protocol.

In the embodiments of the present disclosure, the term "protocol" in the embodiments of the present disclosure may refer to a standard protocol in the field of communications, such as an LTE protocol, an NR protocol, and related protocols applied to a future communications system, which is not limited in the present disclosure.

In the embodiments of the present disclosure, the term "and/or" in this specification is merely an association relationship for describing associated objects, indicating that there are three relationships, e.g., A and/or B may indicate that A exists alone, A and B exist at the same time, and B exists alone. In addition, the character "/" in this specification generally indicates an "or" relationship between the associated objects.

In the embodiments of the present disclosure, in various embodiments of the present disclosure, a size of a sequence number of each process does not mean an execution sequence, and the execution sequence of each process should be determined by its function and internal logic but should not constitute any limitation on an implementation process of the embodiments of the present disclosure.

In the several embodiments provided in the present disclosure, it should be understood that the disclosed system, apparatus, and method may be implemented in other manners. For example, the apparatus embodiments described above are merely illustrative, and the division of the units is merely a logical function division. In actual implementation, there may be alternative division manners, such as combining a plurality of units or components or integrating them into another system, or ignoring or not executing some features. In addition, the shown or discussed mutual coupling or direct coupling or communication connection may be indirect coupling or communication connection through some interfaces, devices, or units, which may be electrical, mechanical, or in other forms.

The units described as separate parts may or may not be physically separate, and parts shown as units may or may not be physical units, i.e., may be located in one position, or may be distributed on a plurality of network units. Some or all of the units may be selected according to actual needs to achieve the objectives of the solutions of the embodiments.

In addition, functional units in the embodiments of the present disclosure may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of the present disclosure are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium, for example, the computer instructions may be transmitted from a website, a computer, a server, or a data center to another website, computer, server, or data center in a wired (e.g., a coaxial cable, an optical fiber, a digital subscriber line (DSL)) or a wireless (e.g., infrared, wireless, microwave, etc.) manner. The computer-readable storage medium may be any usable medium readable by a computer, or a data storage device, such as a server or a data center including one or more integrated usable media. The usable medium may be a magnetic medium (e.g., a floppy disk, a hard disk, or a magnetic tape), an optical medium (e.g., a digital video disk (DVD)), a semiconductor medium (e.g., a solid state disk (SSD)), or the like.

The foregoing descriptions are merely specific implementations of the present disclosure, but the protection scope of the present disclosure is not limited thereto, and any changes or substitutions may be easily conceived of by a person skilled in the art within the technical scope disclosed in the present disclosure. Therefore, the protection scope of the present disclosure shall be subject to the protection scope of the claims.

## Claims

1. A method for wireless communication, comprising:
sending, by a terminal device, first information to a first network device, wherein the first information is used to indicate to the first network device that no gap is configured in one or more time windows.

2. The method according to claim 1, wherein in the one or more time windows, a second network device is in an energy-saving state, and the gap is used for the terminal device to perform an operation in a network corresponding to the second network device.

3. The method according to claim 2, wherein when the second network device is in the energy-saving state, the second network device performs one or more of:
not receiving uplink;
not sending downlink; and
not receiving uplink and not sending downlink.

4. The method according to any one of claims 1 to 3, wherein the first information includes energy-saving information of a second network device, and the energy-saving information of the second network device includes information of the one or more time windows.

5. The method according to any one of claims 1 to 4, wherein the first information is used to notify the first network device of capability information of the terminal device corresponding to the one or more time windows.

6. The method according to claim 5, wherein the capability information of the terminal device corresponding to the one or more time windows is indicated by a correspondence between the one or more time windows and one or more capabilities.

7. The method according to any one of claims 1 to 6, wherein the first information is generated according to energy-saving information of a second network device.

8. The method according to any one of claims 1 to 7, wherein partial time windows among a plurality of time windows overlap.

9. The method according to claim 8, wherein when the partial time windows among the plurality of time windows overlap, the terminal device communicates with the first network device based on a lowest capability of capabilities corresponding to the partial time windows.

10. The method according to any one of claims 1 to 9, further comprising:
receiving, by the terminal device, a first parameter configuration sent by the first network device, wherein the first parameter configuration is determined based on the first information.

11. The method according to any one of claims 1 to 10, wherein the first information is sent via terminal device assistance information.

12. The method according to any one of claims 1 to 11, wherein the first information is sent via one or both of radio resource control, RRC, signaling and medium access control control element, MAC CE, signaling.

13. The method according to any one of claims 1 to 12, wherein information of the one or more time windows is obtained from a second network device.

14. The method according to any one of claims 1 to 13, wherein one of the sending of the first information and updating of the first information is triggered based on a timer.

15. The method according to any one of claims 1 to 14, wherein the terminal device supports a multi-SIM technology.

16. A method for wireless communication, comprising:
receiving, by a first network device, first information sent by a terminal device, wherein the first information is used to indicate to the first network device that no gap is configured in one or more time windows.

17. The method according to claim 16, wherein in the one or more time windows, a second network device is in an energy-saving state, and the gap is used for the terminal device to perform an operation in a network corresponding to the second network device.

18. The method according to claim 17, wherein when the second network device is in the energy-saving state, the second network device performs one or more of:
not receiving uplink;
not sending downlink; and
not receiving uplink and not sending downlink.

19. The method according to any one of claims 16 to 18, wherein the first information includes energy-saving information of a second network device, and the energy-saving information of the second network device includes information of the one or more time windows.

20. The method according to any one of claims 16 to 19, wherein the first information is used to notify the first network device of capability information of the terminal device corresponding to the one or more time windows.

21. The method according to claim 20, wherein the capability information of the terminal device corresponding to the one or more time windows is indicated by a correspondence between the one or more time windows and one or more capabilities.

22. The method according to any one of claims 16 to 21, wherein the first information is generated according to energy-saving information of a second network device.

23. The method according to any one of claims 16 to 22, wherein partial time windows among a plurality of time windows overlap.

24. The method according to claim 23, wherein when the partial time windows among the plurality of time windows overlap, the terminal device communicates with the first network device based on a lowest capability of capabilities corresponding to the partial time windows.

25. The method according to any one of claims 16 to 24, further comprising:
sending, by the first network device, a first parameter configuration to the terminal device, wherein the first parameter configuration is determined based on the first information.

26. The method according to any one of claims 16 to 25, wherein the first information is sent via terminal device assistance information.

27. The method according to any one of claims 16 to 26, wherein the first information is sent via one or both of radio resource control, RRC, signaling and medium access control control element, MAC CE, signaling.

28. The method according to any one of claims 16 to 27, wherein information of the one or more time windows is obtained from a second network device.

29. The method according to any one of claims 16 to 28, wherein one of the sending of the first information and updating of the first information is triggered based on a timer.

30. The method according to any one of claims 16 to 29, wherein the terminal device supports a multi-SIM technology.

31. A method for wireless communication, comprising:
sending, by a second network device, energy-saving information of the second network device to a terminal device, wherein the energy-saving information is used for the terminal device to determine first information, and the first information is used to indicate to a first network device that no gap is configured in one or more time windows.

32. The method according to claim 31, wherein the second network device is in an energy-saving state in the one or more time windows, and the gap is used for the terminal device to perform an operation in a network corresponding to the second network device.

33. The method according to claim 32, wherein when the second network device is in the energy-saving state, the second network device performs one or more of:
not receiving uplink;
not sending downlink; and
not receiving uplink and not sending downlink.

34. The method according to any one of claims 31 to 33, wherein the first information includes energy-saving information of the second network device, and the energy-saving information of the second network device includes information of the one or more time windows.

35. The method according to any one of claims 31 to 34, wherein the first information is used to notify the first network device of capability information of the terminal device corresponding to the one or more time windows.

36. The method according to claim 35, wherein the capability information of the terminal device corresponding to the one or more time windows is indicated by a correspondence between the one or more time windows and one or more capabilities.

37. The method according to any one of claims 31 to 36, wherein the first information is generated according to the energy-saving information of the second network device.

38. The method according to any one of claims 31 to 37, wherein partial time windows among a plurality of time windows overlap.

39. The method according to claim 38, wherein when the partial time windows among the plurality of time windows overlap, the terminal device communicates with the first network device based on a lowest capability of capabilities corresponding to the partial time windows.

40. The method according to any one of claims 31 to 39, wherein the first information is sent via terminal device assistance information.

41. The method according to any one of claims 31 to 40, wherein the first information is sent via one or both of radio resource control, RRC, signaling and medium access control control element, MAC CE, signaling.

42. The method according to any one of claims 31 to 41, wherein one of the sending of the first information and updating of the first information is triggered based on a timer.

43. The method according to any one of claims 31 to 42, wherein the terminal device supports a multi-SIM technology.

44. A terminal device, comprising:
a sending module, configured to send first information to a first network device, wherein the first information is used to indicate to the first network device that no gap is configured in one or more time windows.

45. The terminal device according to claim 44, wherein in the one or more time windows, a second network device is in an energy-saving state, and the gap is used for the terminal device to perform an operation in a network corresponding to the second network device.

46. The terminal device according to claim 45, wherein when the second network device is in the energy-saving state, the second network device performs one or more of:
not receiving uplink;
not sending downlink; and
not receiving uplink and not sending downlink.

47. The terminal device according to any one of claims 44 to 46, wherein the first information includes energy-saving information of a second network device, and the energy-saving information of the second network device includes information of the one or more time windows.

48. The terminal device according to any one of claims 44 to 47, wherein the first information is used to notify the first network device of capability information of the terminal device corresponding to the one or more time windows.

49. The terminal device according to claim 48, wherein the capability information of the terminal device corresponding to the one or more time windows is indicated by a correspondence between the one or more time windows and one or more capabilities.

50. The terminal device according to any one of claims 44 to 49, wherein the first information is generated according to energy-saving information of a second network device.

51. The terminal device according to any one of claims 44 to 50, wherein partial time windows among a plurality of time windows overlap.

52. The terminal device according to claim 51, wherein when the partial time windows among the plurality of time windows overlap, the terminal device communicates with the first network device based on a lowest capability of capabilities corresponding to the partial time windows.

53. The terminal device according to any one of claims 44 to 52, further comprising:
a receiving module, configured to receive a first parameter configuration sent by the first network device, wherein the first parameter configuration is determined based on the first information.

54. The terminal device according to any one of claims 44 to 53, wherein the first information is sent via terminal device assistance information.

55. The terminal device according to any one of claims 44 to 54, wherein the first information is sent via one or both of radio resource control, RRC, signaling and medium access control control element, MAC CE, signaling.

56. The terminal device according to any one of claims 44 to 55, wherein energy-saving information is obtained from a second network device.

57. The terminal device according to any one of claims 44 to 56, wherein one of the sending of the first information and updating of the first information is triggered based on a timer.

58. The terminal device according to any one of claims 44 to 57, wherein the terminal device supports a multi-SIM technology.

59. A network device, wherein the network device is a first network device, and the first network device comprises:
a receiving module, configured to receive first information sent by a terminal device, wherein the first information is used to indicate to the first network device that no gap is configured in one or more time windows.

60. The network device according to claim 59, wherein in the one or more time windows, a second network device is in an energy-saving state, and the gap is used for the terminal device to perform an operation in a network corresponding to the second network device.

61. The network device according to claim 60, wherein when the second network device is in the energy-saving state, the second network device performs one or more of:
not receiving uplink;
not sending downlink; and
not receiving uplink and not sending downlink.

62. The network device according to any one of claims 59 to 61, wherein the first information includes energy-saving information of a second network device, and the energy-saving information of the second network device includes information of the one or more time windows.

63. The network device according to any one of claims 59 to 62, wherein the first information is used to notify the first network device of capability information of the terminal device corresponding to the one or more time windows.

64. The network device according to claim 63, wherein the capability information of the terminal device corresponding to the one or more time windows is indicated by a correspondence between the one or more time windows and one or more capabilities.

65. The network device according to any one of claims 59 to 64, wherein the first information is generated according to energy-saving information of a second network device.

66. The network device according to any one of claims 59 to 65, wherein partial time windows among a plurality of time windows overlap.

67. The network device according to claim 66, wherein when the partial time windows among the plurality of time windows overlap, the terminal device communicates with the first network device based on a lowest capability of capabilities corresponding to the partial time windows.

68. The network device according to any one of claims 59 to 67, wherein the first network device further includes:
a sending module, configured to send a first parameter configuration to the terminal device, wherein the first parameter configuration is determined based on the first information.

69. The network device according to any one of claims 59 to 68, wherein the first information is sent via terminal device assistance information.

70. The network device according to any one of claims 59 to 69, wherein the first information is sent via one or both of radio resource control, RRC, signaling and medium access control control element, MAC CE, signaling.

71. The network device according to any one of claims 59 to 70, wherein energy-saving information is obtained from a second network device.

72. The network device according to any one of claims 59 to 71, wherein one of the sending of the first information and updating of the first information is triggered based on a timer.

73. The network device according to any one of claims 59 to 72, wherein the terminal device supports a multi-SIM technology.

74. A network device, wherein the network device is a second network device, and the second network device comprises:
a sending module, configured to send energy-saving information of the second network device to a terminal device, wherein the energy-saving information is used for the terminal device to determine first information, and the first information is used to indicate to a first network device that no gap is configured in one or more time windows.

75. The network device according to claim 74, wherein the second network device is in an energy-saving state in the one or more time windows, and the gap is used for the terminal device to perform an operation in a network corresponding to the second network device.

76. The network device according to claim 75, wherein when the second network device is in the energy-saving state, the second network device performs one or more of:
not receiving uplink;
not sending downlink; and
not receiving uplink and not sending downlink.

77. The network device according to any one of claims 74 to 76, wherein the first information includes energy-saving information of the second network device, and the energy-saving information of the second network device includes information of the one or more time windows.

78. The network device according to any one of claims 74 to 77, wherein the first information is used to notify the first network device of capability information of the terminal device corresponding to the one or more time windows.

79. The network device according to claim 78, wherein the capability information of the terminal device corresponding to the one or more time windows is indicated by a correspondence between the one or more time windows and one or more capabilities.

80. The network device according to any one of claims 74 to 79, wherein the first information is generated according to the energy-saving information of the second network device.

81. The network device according to any one of claims 74 to 80, wherein partial time windows among a plurality of time windows overlap.

82. The network device according to claim 81, wherein when the partial time windows among the plurality of time windows overlap, the terminal device communicates with the first network device based on a lowest capability of capabilities corresponding to the partial time windows.

83. The network device according to any one of claims 74 to 82, wherein the first information is sent via terminal device assistance information.

84. The network device according to any one of claims 74 to 83, wherein the first information is sent via one or both of radio resource control, RRC, signaling and medium access control control element, MAC CE, signaling.

85. The network device according to any one of claims 74 to 84, wherein one of the sending of the first information and updating of the first information is triggered based on a timer.

86. The network device according to any one of claims 74 to 85, wherein the terminal device supports a multi-SIM technology.

87. A terminal device, comprising a transceiver, a memory, and a processor, wherein the memory is configured to store a program, and the processor is configured to invoke the program in the memory to cause the terminal device to perform the method according to any one of claims 1 to 15.

88. A network device, comprising a transceiver, a memory, and a processor, wherein the memory is configured to store a program, and the processor is configured to invoke the program in the memory to cause the network device to perform the method according to any one of claims 16 to 30 and 31 to 43.

89. An apparatus, comprising a processor, wherein the processor is configured to invoke a program from a memory to cause the apparatus to perform the method according to any one of claims 1 to 43.

90. A chip, comprising a processor, wherein the processor is configured to invoke a program from a memory to cause a device on which the chip is installed to perform the method according to any one of claims 1 to 43.

91. A computer-readable storage medium storing a program, wherein the program causes a computer to perform the method according to any one of claims 1 to 43.

92. A computer program product, comprising a program that causes a computer to perform the method according to any one of claims 1 to 43.

93. A computer program, wherein the computer program causes a computer to perform the method according to any one of claims 1 to 43.
